Europäisches Patentamt

European Patent Office

Office européen des brevets

(11) Veröffentlichungsnummer : **0 071 695**
**B1**

(12) # EUROPÄISCHE PATENTSCHRIFT

(45) Veröffentlichungstag der Patentschrift :
**12.02.86**

(21) Anmeldenummer : **82102499.9**

(22) Anmeldetag : **25.03.82**

(51) Int. Cl.⁴ : **G 08 B 21/00**, G 01 M 11/08

(54) **Mittels Lichtwellenleiter auf Bruch oder Dehnung überwachbares Bauteil.**

(30) Priorität : **12.08.81 DE 3131870**

(43) Veröffentlichungstag der Anmeldung :
**16.02.83 Patentblatt 83/07**

(45) Bekanntmachung des Hinweises auf die Patenterteilung : **12.02.86 Patentblatt 86/07**

(84) Benannte Vertragsstaaten :
**CH FR GB LI NL SE**

(56) Entgegenhaltungen :
**EP-A- 0 038 401**
**DE-A- 3 015 391**
**DE-B- 2 937 824**
**GB-A- 2 036 336**
**Die Akte enthält technische Angaben, die nach dem Eingang der Anmeldung eingereicht wurden und die nicht in dieser Patentschrift enthalten sind.**

(73) Patentinhaber : **Felten & Guilleaume Energietechnik GmbH**
**Schanzenstrasse 24-30 Postfach 80 50 01**
**D-5000 Köln 80 (DE)**

(72) Erfinder : **Starke, Jürgen Peter, Dr.-Ing.**
**Auf dem Broich 12**
**D-5068 Odenthal-Glöbusch (DE)**
Erfinder : **Levacher, Friedrich Karl, Dr.**
**Medardusstrasse 24**
**D-5026 Brauweiler (DE)**
Erfinder : **Federmann, Helmut, Dr.**
**Holunderweg 17**
**D-5060 Berg. Gladbach (DE)**

EP 0 071 695 B1

Jouve, 18, rue St-Denis, 75001 Paris, France

## Beschreibung

Die Erfindung betrifft ein auf Bruch oder Dehnung überwachbares Bauteil mit kraftschlüssig daran befestigten oder darin eingearbeiteten Lichtwellenleitern, deren Anfänge und Enden zur Überwachung der Lichtleitung herausgeführt sind.

Mit der wachsenden Komplexität moderner Bauwerke, Fahrzeuge und Maschinen steigt auch der Bedarf nach einer Möglichkeit, bestimmte Bauteile einfach, schnell und ohne Demontage sicher auf physikalische Zustandsänderungen zu überwachen. Ein weiteres Anwendungsgebiet überwachbarer Bauteile ist die Einbruchs- und Diebstahlsicherung.

Bekannt ist ein Verfahren zur Bruch-Überwachung von auf Zug beanspruchten Bauteilen, bei dem in den bruchgefährdeten Zonen der Bauteile Lichtleitfasern befestigt oder eingelegt werden, und bei dem die Lichtleitung der Lichtleitfasern laufend oder in Zeitabständen überwacht wird (DE-B1-29 37 824).

Dieser Stand der Technik gibt aber noch keine Hinweise über die Anpassung der verwendeten Lichtwellenleiter an die Eigenschaften des zu überwachenden Bauteils.

Vorgeschlagen wurde auch, Lichtleitfasern in faserverstärkten Bauteilen anstelle einer oder mehreren der Verstärkungsfasern einzuarbeiten und die Lichtleitfasern durch elastische Hüllen mit dem Bauteil zu verbinden (EP-A-38 401).

Dieser Vorschlag ist für Bauteile geeignet, deren Bruchdehnung größer ist als die Bruchdehnung der verwendeten Lichtwellenleiter. Damit ist nicht sichergestellt, daß die Lichtwellenleiter bei einer bestimmten kritischen Bauteildehnung reißen und damit die gewünschte Anzeige liefern, daß das Bauteil überdehnt wurde.

Ähnliches gilt auch für den Vorschlag gemäß der GB-A-2 036 336, in der beschrieben ist, daß man optische Fasern, deren Dämpfung sich mit einer Dehnung der Faser ändert, zur Überwachung von beanspruchten Stellen einsetzen kann. Mit dieser bekannten Aufbauform läßt sich keine einfache Aussage gewinnen. Insbesondere lassen sich kurzzeitige Überlastungen des Materials kaum festhalten, weil die Dämpfung der Faser nach der Überlastung wieder zurückgeht und damit keine definierte Aussage über den tatsächlichen Belastungszustand mehr vorhanden ist.

Der Erfindung liegt die Aufgabe zugrunde, auch solche Bauteile durch darin oder daran angeordnete Lichtwellenleiter überwachbar zu machen, deren Bruchdehnung kleiner ist als die Bruchdehnung der verwendeten Lichtwellenleiter und dabei eine Aussage nach Lage und Überlastungsrichtung zu ermöglichen.

Diese Aufgabe wird erfindungsgemäß dadurch gelöst, daß das überwachungsrelevante Kriterium Lichtleitungsbruch ist und mehrere Lichtwellenleiter mit definierter, gegebenenfalls auch unterschiedlicher mechanischer Vorspannung koordinatenförmig an oder in der zu überwachenden Zone des Bauteils angeordnet sind.

In einer Ausgestaltung der Erfindung, bei der das Bauteil wenigstens einen zu überwachenden Teil mit rohrförmigem Querschnitt aufweist, sind zusätzlich zu axial an oder in der Wandung angeordneten Lichtwellenleitern ein oder mehrere Lichtwellenleiter mit definierten mechanischen Vorspannungen an oder in der zu überwachenden Zone mit rohrförmigen Querschnitt gewickelt.

Die Erzeugung von definierten mechanischen Vorspannungen durch Bremsen der Abwickelrollen ist besonders einfach und kann sehr präzise gehandhabt werden.

Zusätzliche Vorteile ergeben sich noch, wenn Hochspannung führende Bauteile wie Freileitungen, Isolatoren oder Druckgefäße für Luft, Isolieröl oder Isoliergase mit Hilfe der Erfindung überwacht werden. Es besteht dann kein Bedarf an elektrisch leitenden Verbindungen zwischen den zu überwachenden Zonen und der Anzeige- oder Beobachtungsstelle, denn die Glasfasern können potentialfrei herausgeführt werden.

Ausführungsbeispiele der Erfindung sind in der Zeichnung dargestellt und werden im folgenden näher beschrieben. Es zeigen :

Figur 1 einen Behälter mit eingearbeiteten Lichtwellenleitern und ihre Überwachung (ohne achsparallel in der Wandung angeordneten Lichtwellenleiter).

Figur 2 ein Bauteil mit koordinatenförmig eingearbeiteten Lichtwellenleitern.

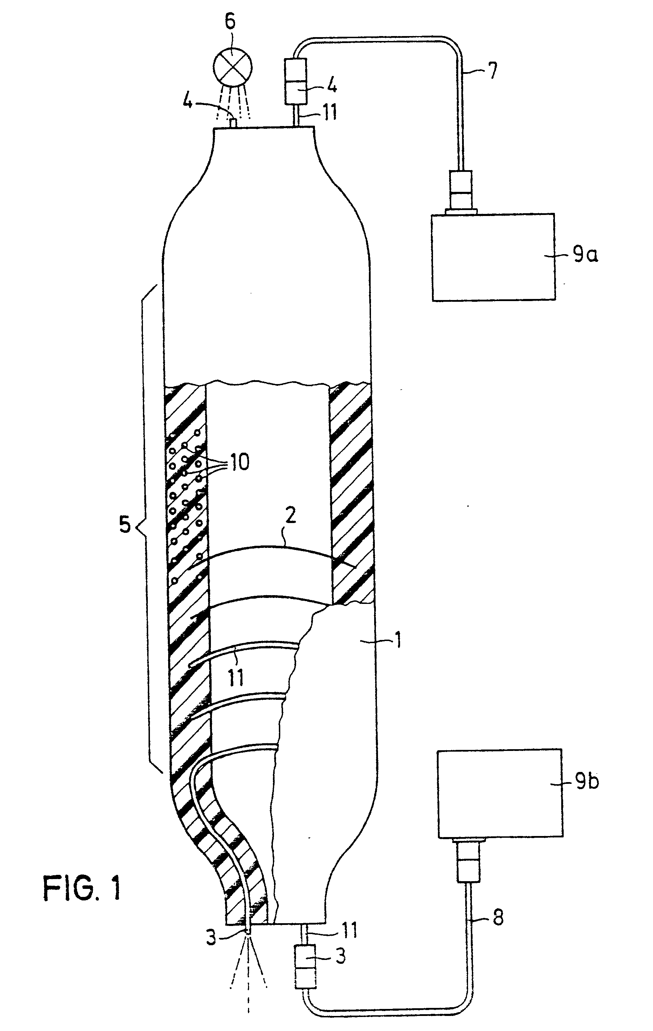

In Fig. 1 ist ein rohr- oder flaschenförmiger Druckbehälter 1 schematisch dargestellt, der beispielsweise aus mit Fasern 10 verstärktem Kunststoff bestehen kann. Zwischen den gewickelten Lagen der Verstärkungsfasern 10 sind innerhalb der zu überwachenden Zone 5 Lichtwellenleiter 2 angeordnet, die zweckmäßigerweise von Kunststoffhüllen 11 umgeben sind. Die Anfänge 4 und die Enden 3 der Lichtwellenleiter 2 sind zur Überwachung der Lichtleitfähigkeit herausgeführt. Die Lichtwellenleiter 2 werden während der Herstellung des Behälters 1 von einer Trommel abgezogen, die in definierter Weise gebremst werden kann, um so die gewünschte Vorspannung beim Aufwickeln auf den Behälterkörper zu erzeugen. Eine Überwachungsmöglichkeit der Lichtleitung der Lichtwellenleiter 2 ist durch die Lichtquelle 6 angedeutet, deren Licht auf den Anfang 4 eines Lichtwellenleiters 2 fällt und an seinem Ende 3 wieder austritt, so lange der Lichtwellenleiter 2 unbeschädigt ist. Eine automatisierte Überwachung ist durch die Lichtquelle 9a und den Lichtempfänger 9b angedeutet, welche über Lichtwellenleiter-Kabel 7 und 8 und hierfür geeignete Steckverbindungen mit dem Anfang 4 und dem Ende 3 eines anderen, mit einem Kunststoffschlauch 11 umgebenen Lichtwellenleiters 2 verbunden werden.

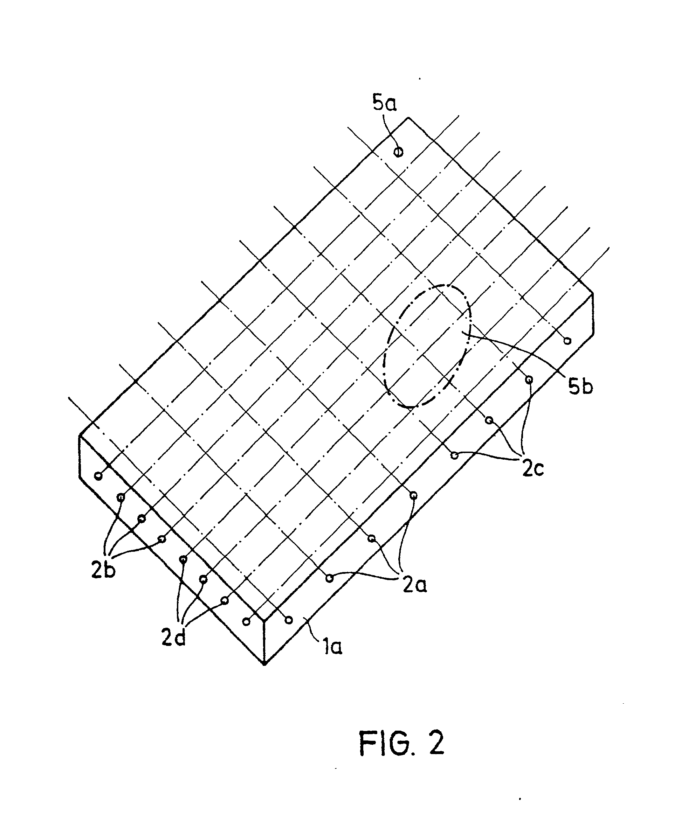

In Fig. 2 ist ein plattenförmiges Bauteil 1a schematisch dargestellt, wobei durch das Bezugszeichen 5a angedeutet werden soll, daß das gesamte dargestellte Bauteil eine zu überwachende Zone darstellt. In dem Bauteil 1a verläuft eine Gruppe von Lichtwellenleitern 2b und 2d parallel zueinander in einer Richtung, während eine andere Gruppe von Lichtwellenleitern 2a und 2c rechtwinkelig dazu angeordnet ist. Wird in diesem Fall beispielsweise die Zone 5b überlastet, so daß die in dieser Zone enthaltenen Lichtwellenleiter 2d und 2c brechen, so kann ohne weiteres aus dem Bruch der hier verlaufenden Lichtwellenleiter auf den Ort der Überlastung geschlossen werden. Eine solche Anordnung ist besonders vorteilhaft, wenn die zu überwachenden Bauteile sehr großflächig sind, beispielsweise Mauern, Zäune, aber auch Brückentragwerke. Durch eine solche Ortsbestimmung lassen sich dann sofort gezielte Maßnahmen zur Verhinderung weiterer Schäden einleiten oder aber, beispielsweise in der Entwicklung, Erkenntnisse für verbesserte Gestaltung von Bauteilen ableiten. Durch die Wahl der Vorspannung ist es dabei möglich, auch kleine Belastungen und geringfügige Überdehnungen festzustellen, die noch nicht zu einer außen sichtbaren Beschädigung des Bauteils geführt haben.

**Patentansprüche**

1. Auf Bruch oder Dehnung überwachbares Bauteil (1) mit kraftschlüssig daran befestigten oder darin eingearbeiteten Lichtwellenleitern (2), deren Anfänge (4) und Enden (3) zur Überwachung der Lichtleitung herausgeführt sind, dadurch gekennzeichnet, daß das überwachungsrelevante Kriterium Lichtleitungsbruch ist und mehrere Lichtwellenleiter (2a, 2b, 2c, 2d) mit definierter, gegebenenfalls auch unterschiedlicher mechanischer Vorspannung koordinatenförmig an oder in der zu überwachenden Zone (5a) des Bauteils (1a) angeordnet sind.

2. Bauteil nach Anspruch 1, mit wenigstens einem Teil mit rohrförmigem Querschnitt, dadurch gekennzeichnet, daß ein oder mehrere Lichtwellenleiter (2) mit definierten mechanischen Vorspannungen an oder in der zu überwachenden Zone (5) mit rohrförmigem Querschnitt angeordnet sind.

**Claims**

1. Element (1) which can be monitored for rupture or stress having optical wave guides (2) which are frictionally secured to or sunk into the element and of which the beginnings (4) and ends (3) are led out for monitoring the light line, characterised in that the relevant criterium for the monitoring is a rupture in the light line and a plurality of optical wave guides (2a, 2b, 2c, 2d) having defined and also possibly different mechanical prestressing are arranged in the form of coordinates on or in the zone (5a) to be monitored of the element (1a).

2. Element according to claim 1, having at least one part with a tube-shaped section, characterised in that one or more optical wave guides (2) with defined mechanical prestressing are arranged on or in the zone (5) to be monitored with a tube-shaped section.

**Revendications**

1. Pièce de construction (1) surveillée en rupture et en allongement, par des guides d'ondes lumineuses (2) fixés à la pièce par une liaison par la forme, ou intégrés à celle-ci, et dont l'origine (4) et l'extrémité (3) sortent de la pièce pour surveiller le guide d'ondes lumineuses, caractérisée en ce que le critère déterminant la surveillance est la rupture d'un guide d'ondes lumineuses et en ce que plusieurs guides d'ondes lumineuses (2a, 2b, 2c, 2d) sont prévus suivant un système de coordonnées, déterminé, avec le cas échéant une précontrainte mécanique différente, ou sont prévus dans la zone à surveiller (5a) de la pièce (1a).

2. Pièce selon la revendication 1, ayant au moins en partie une section tubulaire, caractérisée par un ou plusieurs guides d'ondes lumineuses (2) prévus avec des précontraintes mécaniques déterminées sur ou dans la zone (5) à surveiller de la section tubulaire.

FIG. 1

FIG. 2